# FASCICULE DE BREVET EUROPEEN

(11) **EP 1 631 148 B1**
(45) Date de publication et mention de la délivrance du brevet: **30.08.2006**
(21) Numéro de dépôt: 04741773.8
(22) Date de dépôt: 10.06.2004
(51) Int. Cl.: A01N 65/00

(54) **ELECITEUR PROVENANT D'EXTRAITS DE TRIGONELLA-FOENUM-GRACUM LE TRAITEMENT DES AGENTS PATHOGENES DES PLANTES, UTILISATION ET PROCEDE DE FABRICATION DUDIT PRODUIT**
AUS TRIGONELLA FOENUM GRAECUM-EXTRAKTEN HERGESTELLTER ELICITOR FÜR DIE BEHANDLUNG VON PFLANZENPATHOGENEN, SEINE VERWENDUNG SOWIE VERFAHREN ZU SEINER HERSTELLUNG
ELICITOR MADE FROM TRIGONELLA FOENUM GRAECUM EXTRACTS FOR THE TREATMENT OF PLANT PATHOGENS, USE THEREOF, AND METHOD FOR THE PRODUCTION THEREOF

(30) Priorité: 10.06.2003 FR 0306957
(43) Date de publication de la demande: 08.03.2006
(73) Titulaire: S.O.F.T Sarl, 11210 Port La Nouvelle (FR); Université Montpellier II, 34095 Montpellier Cedex 05 (FR); BHEST SARL, 11210 Port La Nouvelle (FR)
(72) Inventeur: MARTINEZ, Christelle, F-11210 Port La Nouvelle (FR); BACCOU, Jean-Claude, F-34095 Montpellier Cédex (FR); DELPECH, Lucien, F-11210 Port La Nouvelle (FR); DELRIEUX, Michel, F-11210 Port La Nouvelle (FR); CASSAN, Henri, F-11100 Narbonne (FR)
(74) Mandataire: Ravina, Bernard
(86) Numéro de dépôt international: PCT/EP2004/051083
(87) Numéro de publication internationale: WO 2004/107864

(56) Documents cités:
- WO-A-02/102162
- US-A- 5 997 877

## Description

### Domaine de l'invention

La présente invention concerne un produit de traitement des plantes, une utilisation dudit produit et un procédé de fabricatrion dudit produit. Elle s'applique, en particulier à la lutte contre des agents pathogènes et toutes sortes de parasites de plantes (champignon, bactéries, virus, insectes...etc....) à l'aide d'un nouveau stimulateur des défenses naturelles des plantes ou éliciteur. La nouvelle composition de produit est active à titre préventif et curatif et comporte la mise en oeuvre d'un extrait de fenugrec ou Trigonella foenum graecum sans extraction en phase liquide.

### Technique antérieure

Les plantes subissent en permanence une pression parasitaire de la part de nombreux agents pathogènes comme des virus, des bactéries, des champignons ou des insectes. La résistance de la plante à un agent pathogène résulte soit de la reconnaissance de l'agent pathogène par la plante (relation gène pour gène), soit de la stimulation des défenses sous l'effet de blessures causées par le parasite.

Dans le premier cas, la résistance résulte de la reconnaissance de l'agent pathogène porteur d'un gène particulier appelé "gène d'avirulence" par la plante dotée d'un "gène de résistance" correspondant. Dans ce cas, il existe une véritable relation interactive génétiquement programmée entre plante et parasite. Après reconnaissance des deux protagonistes, des mécanismes spécifiques sont alors développés par la plante (cascade d'événements métaboliques, synthèse de signaux messagers de la résistance), lui conférant le caractère de résistance, tandis que l'invasion des tissus hôtes par l'agent pathogène reste très localisée.

Dans le second cas, les mécanismes de défense sont induits, lors d'attaques fongiques par exemple, par les oligosaccharides émanant d'une part de la dégradation des parois du champignon sous l'action des hydrolases de l'hôte, et d'autres part des parois des cellules hydrolysées par les enzymes du champignon. Ces débris de parois servent également de messagers de la résistance.

Suite à un premier déclenchement des mécanismes de résistance, les végétaux peuvent développer une résistance accrue face à de nouvelles attaques de parasites, notamment dans les parties non infectées de la plante, et ceci à nouveau grâce à certains «messagers chimiques naturels». Ce mécanisme est appelé «Résistance Systémique Acquise».

Lorsqu'une plante est sensible à un agent pathogène, celle-ci est incapable de reconnaître son agresseur, soit par la relation gène pour gène, soit par l'effet «blessure». Celle-ci est alors incapable d'activer de façon efficace ses gènes de défense. Il est alors possible de stimuler les défenses naturelles des plantes en leur fournissant de façon exogène ces «signaux chimiques naturels» de la résistance qu'elles sont incapables de produire dans certains cas vis à vis de certains agents pathogènes.

Lorsqu'il y a reconnaissance entre la plante et l'agent pathogène, des mécanismes particuliers sont développés par la plante. Souvent la plante répond par une apparition de nécrose cellulaire sur le site de l'attaque par l'agent pathogène et bloque ainsi sa progression. Cette réaction de défense est presque toujours associée à la mise en oeuvre de mécanisme tels que la biosynthèse de phytalexines (molécules antifongiques), d'enzymes de défense comme les peroxydases ou des protéines en liaison avec la pathogenèse (protéines PR) comme les chitinases ou les β-1,4-endoglucanases. Ces enzymes sont capables de lyser les parois fongiques et bactériennes. Lorsqu'il y a résistance, les plantes sont capables de renforcer les parois cellulaires (synthèse de lignine) pour bloquer l'agent pathogène sur son site de pénétration.

On connaît un procédé pour la stimulation des défenses naturelles de plantes agronomiquement utiles qui comprend l'application auxdites plantes d'un agent éliciteur ou sensibilisateur qui est capable au contact des plantes de provoquer préventivement dans celles-ci l'activation des gènes de défense sur le site d'application du produit ainsi qu'une résistance systémique acquise. Un tel procédé est plus particulièrement décrit dans la demande de brevet français déposée le 18 juillet 1997 sous le No. 2 766 059 déposée par les Laboratoires GOEMAR. Ce procédé utilise une quantité efficace d'un oligo β 1-3-glucane. Celui-ci est préparé à partir de β 1-3-glucanes d'origine diverses qui sont hydrolysés en oligo β 1-3-glucanes. Les β 1-3-glucanes proviennent de bactéries, notamment *d'Alcaligenes faecalis,* de champignons, notamment de *Schizophyllum* et de *Sclerotium glucanium,* de levures, notamment de *Saccharomyces cerevisae,* d'algues et de céréales.

Cependant, ce procédé ne permet pas de provoquer une résistance du même plant plusieurs fois de suite. Une seule pulvérisation est possible. Ce procédé est donc essentiellement préventif et limité dans le temps.

On a décrit dans le brevet des Etats-Unis d'Amérique délivré le 2 novembre 1999 à EDEN Bioscience sous le No. 5 977 060, un procédé de lutte contre les insectes sur des plantes. Dans ce brevet, on cite de nombreuses références concernant les éliciteurs pour des systèmes défensifs des plantes contre les insectes auxquelles on peut se reporter. Ce procédé est un procédé de lutte contre les insectes pour les plantes qui consiste à appliquer un éliciteur polypeptide ou protéine à une plante ou une graine dans des conditions efficaces pour lutter contre les insectes. L'éliciteur (polypeptide, ou protéine) causant la réponse hypersensible, correspond à celui obtenu à partir d'un agent pathogène choisis dans le groupe constitué par Erwinia, Pseudomonas, Xanthomonas, Phyrophtora et leurs mélanges. Dans un mode de réalisation l'éliciteur peut être appliqué aux plantes en appliquant une bactérie contenant des gènes capables de sécréter ou d'exporter le polypeptide ou la protéine. La bactérie ne provoque pas la maladie et a été transformée (par exemple de manière recombinante) par des gènes encodant un polypeptide ou une protéine éliciteur de réponse hypersensible. Ce document décrit donc un procédé de lutte contre les insectes et non contre les agents pathogènes dans leur ensemble. Par ailleurs, ce document fait référence à des manipulations génétiques qui sont très mal perçues par le public.

On connaît par ailleurs des graines de fenugrec qui sont utilisées dans l'industrie agroalimentaire comme épice et dans l'industrie pharmaceutique. Le fenugrec ou Trigonella foenum graecum ou encore Sénégré est une légumineuse de la famille des papilionacées. Le fenugrec contient une huile essentielle constituée de 40 composés différents dont la 3-hydroxy-4,5-diméthyl-oxolane-2-one semble être le composant aromatique le plus important. Parmi les composants non volatils qu'il contient, on a identifié des furostanol glycosides, des stérols et des saponines stéroïdiques comme présentant un intérêt potentiel pour l'industrie pharmaceutique.

On a décrit dans le brevet des Etats-Unis d'Amérique délivré le 7 décembre 1999 à la société Emerald Seed Products Ltd. sous le No. 5 997 877, un procédé d'extraction de fractions valables commercialement de graines de fenugrec. Les graines de fenugrec contiennent un noyau central jaune, qui est le cotylédon et le germe entouré de l'endosperme blanc et semi-transparent et du tégument. Cet endosperme contient des gommes de galactomannane et est entouré d'une écorce brun foncé. Le procédé de récupération des gommes ou oléorésines consiste à humidifier les graines de fenugrec dans une plage de 14% à 20% d'humidité ; à broyer les graines de fenugrec ; à mélanger les graines broyées avec un solvant pendant une période de contact à une certaine température de manière que certains composants des graines soient absorbés par le solvant ; à séparer l'extrait du solvant. Ce procédé a pour inconvénient d'utiliser un solvant qui est un alcool polaire. Un autre procédé est décrit dans ce brevet U.S. No. 5 997 877 qui consiste à récupérer les fibres solubles. A cet effet, on broie les graines, on les tamise et on récupère la partie lourde constituée du tégument et du mucilage (enveloppe). Cette partie lourde est ensuite traitée par de l'eau chaude, ce qui permet de récupérer les fibres solubles. Les gommes se trouvant dans la partie légère sont ensuite récupérées à, l'aide d'un solvant.

L'état de la technique évoqué ci-dessus présente l'inconvénient que le produit obtenu à partir de Trigonella foenum graecum est obtenu par une extraction au moyen d'un solvant alcool qui n'est pas neutre sur le produit final et qui peut avoir des effets toxiqués sur la plante. C'est le cas notamment de l'état de la technique constitué par les documents DE 197 266, EP 0 493 670 ou DATABASE N 1994-84121 ou XP 002 194 376 ou Chimical Abstract Vol 119 N° 11 (1993-9-13) Krata.

Une avance technologique qui est constituée par le brevet FR 01 07898 des mêmes demandeurs qui consiste à utiliser la graine de Trigonella foenum graecum dont sont obtenus des extraits par broyage des graines, séparation de la protection de la fraction cotylédon et germe, et extraction des composants de l'éliciteur de cette fraction germe et cotylédon par de l'eau au cours d'une opération de filtration.

### Résumé de l'invention

La présente invention a pour objet de lutter contre des agents pathogènes et toutes sortes de parasites de plantes (champignons, virus, bactéries, insectes...etc....) à l'aide d'un nouveau produit éliciteur (stimulateur des défenses de la plante contre les agents pathogènes), ce dernier permettant une action préventive et également curative.

Un autre objet de la présente invention est de fournir une utilisation d'un éliciteur, cette utilisation permettant d'obtenir un produit phytosanitaire comportant une fonction éliciteur.

Encore un autre objet de la présente invention est de fournir un procédé de préparation d'un nouvel éliciteur, ce procédé permettant d'obtenir un éliciteur qui ne soit pas agressif par rapport aux plantes traitées et à l'environnement.

Les inventeurs ont découvert après des essais en laboratoire, que des extraits secs issus du traitement du fenugrec avaient la propriété de stimuler fortement différentes activités enzymatiques impliquées dans les mécanismes de défense des végétaux contre les agents pathogènes et toutes sortes de parasites de plantes (champignon, bactéries, virus, insectes...et...).

Les inventeurs se sont aperçus après des essais en laboratoire que les mêmes effets étaient obtenus si l'on broyait en poudre la fraction cotylédon et germe de ladite graine et qu'on la mélangeait à de l'eau pour obtenir une solution qui sera projetée sur les plantes. Ce procédé présente l'avantage de ne pas passer par une étape de produit liquide, ce qui permet d'éviter la fermentation du produit et de commercialiser une poudre qui ne sera mise en solution qu'au moment de l'emploi ou au moment du conditionnement du produit, l'extraction des principes actifs se réalisant au moment de la mise en solution. La poudre pourra aussi être directement projetée sur les plantes (poudrage) ou être incorporée dans la fabrication d'un produit phytosanitaire.

La présente invention présente un autre avantage : le broyage de la graine sans passer par une extraction à l'eau permet de conserver intactes toutes les molécules contenues dans le fenugrec, comme par exemple les saponines et les dextrines contenues dans la fraction germe et cotylédon et dans la poudre obtenue. Les saponines ont un effet mouillant sur les feuilles de plantes ce qui accroît l'efficacité de l'éliciteur et les dextrines ont un effet collant qui fixe la solution et ses composés actifs sur la plante couramment en agriculture. Les plantes supportent la répétition des traitements par l'éliciteur et les mécanismes de défense de la plante sont stimulés à chaque traitement.

L'extrait sec de graines de Trigonella foenum graecum est préférentiellement obtenu par un procédé consistant à broyer les graines, à séparer la fraction cotylédon et germe, de la fraction tégument et mucilage. La faction cotylédon et germe est rebroyée de manière à obtenir une poudre de granulométrie de préférence inférieure à 200 microns. Les particules obtenues par broyage et par un tamisage ou une micronisation peuvent aller de 5 à 500 microns.

Selon un premier aspect, la présente invention vise un produit de traitement des plantes, caractérisé en ce qu'il comporte un produit sec obtenu par extraction sans liquide à partir de Trigonetta foenum graecum (fenugrec).

Selon des caractéristiques particulières, le produit sec obtenu à partir de Trigonella foenum graecum (fenugrec) est adapté à être mélangé à au moins un vecteur liquide avant usage.

Selon des caractéristiques particulières, dans le produit de traitement des plantes tel que succinctement exposé ci-dessus, le produit sec obtenu à partir de Trigonella foenum graecum (fenugrec) comprend au moins deux molécules actives issues du fenugrec.

Selon des caractéristiques particulières, dans le produit de traitement des plantes tel que succinctement exposé ci-dessus, le produit sec obtenu à partir de Trigonella foenum graecum (fenugrec) comporte au moins une molécules actives supérieure à 30 000 Dalton et au moins une molécule active inférieure à 30 000 Dalton.

Selon des caractéristiques particulières, dans le produit de traitement des plantes tel que succinctement exposé ci-dessus, le produit sec obtenu à partir de Trigonella foenum graecum (fenugrec) est, au moins partiellement, obtenu à partir de la graine de la plante fenugrec.

Selon des caractéristiques particulières, dans le produit de traitement des plantes tel que succinctement exposé ci-dessus, le produit sec obtenu à partir de Trigonella foenum graecum (fenugrec) est, au moins partiellement, obtenu à partir de la partie aérienne de la plante de fenugrec.

Selon des caractéristiques particulières, dans le produit de traitement des plantes tel que succinctement exposé ci-dessus, le produit sec obtenu à partir de Trigonella foenum graecum (fenugrec) est obtenu, au moins partiellement, à partir de la racine de la plante de fenugrec.

Selon des caractéristiques particulières, le produit sec obtenu à partir de Trigonella foenum graecum est sous n'importe quelle forme de poudre seule, granules seules ou en combinaison avec d'autres produits de formulation.

Selon des caractéristiques particulières, le produit sec obtenu à partir de Trigonella foenum graecum est combinée avec des agents mouillants, dispersants et/ou adhésifs.

Selon des caractéristiques particulières, le produit sec obtenu à partir de Trigonella foenum graecum est combiné avec d'autres produits de traitements parmi les suivants : fongicides, bactéricides, anti-viraux, insecticides, autres stimulateurs de défense et/ou engrais.

Selon des caractéristiques particulières, le produit de traitement des plantes tel que succinctement exposé ci-dessus est adapté à agir sur la précocité de développement des plantes et de récolte.

Selon des caractéristiques particulières, le produit de traitement des plantes tel que succinctement exposé ci-dessus est adapté à agir sur le développement de mycotoxines dans les produits obtenus après récolte.

Selon un deuxième aspect, la présente invention vise une utilisation d'un produit de traitement des plantes tel que succinctement exposé ci-dessus pour la fabrication d'une composition phytosanitaire adaptée à stimuler les défenses de la plante.

Selon un troisième aspect, la présente invention vise une utilisation d'un produit de traitement des plantes tel que succinctement exposé ci-dessus pour la fabrication d'une composition phytosanitaire adaptée à agir sur la précocité de développement des plantes.

Selon un quatrième aspect, la présente invention vise une utilisation d'un produit de traitement des plants tel que succinctement exposé ci-dessus pour la fabrication d'une composition phytosanitaire adaptée pour agir contre le développement de mycotoxines dans les plantes récoltées.

Selon un cinquième aspect, la présente invention vise un procédé d'obtention d'un produit de traitement des plantes tel que succinctement exposé ci-dessus, caractérisé en ce qu'il comporte une étape d'extraction par séparation sans liquide d'un produit sec à partir de Trigonella foenum graecum (fenugrec).

Selon des caractéristiques particulières, le procédé d'obtention d'un produit de traitement des plantes tel que succinctement exposé ci-dessus comporte une étape de réduction en poudre d'une matière de base.

Selon des caractéristiques particulières, le procédé d'obtention d'un produit de traitement des plantes tel que succinctement exposé ci-dessys comporte:
- une étape de broyage de graines de fenugrec,
- une étape de séparation de la fraction germe et cotylédon de la fraction tégument et mucilage,
- une étape de re-broyage de la fraction germe et cotylédon pour obtenir une poudre de granulométrie prédéterminée stockable de manière stable,
- une étape de solubilisation de ladite poudre dans l'eau.

Selon des caractéristiques particulières, le procédé d'obtention d'un produit de traitement des plantes tel que succinctement exposé ci-dessus comporte une étape de tamisage de la fraction germe et cotylédon pour obtenir des particules comprises entre 5 microns et 500 microns.

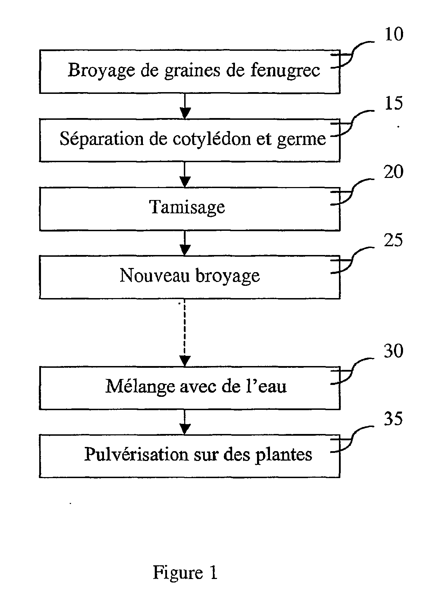

La présente invention sera maintenant décrite plus en détail à l'aide des exemples suivants, qui ne sont en aucun cas destinés à limiter le cadre de la présente invention et à l'aide de la figure 1 qui décrit une succession d'étape de fabrication de produit de traitement de plantes dans un mode de réalisation particulier du procédé objet de la présente invention.

### Exemples

### Exemple 1 - Procédé d'extraction du nouvel éliciteur

On utilise des graines de fenugrec qui sont broyées (étape 10) de façon à obtenir une poudre. On sépare la fraction de cotylédon et de germe de la fraction tégument et mucilage (étape 15) par un procédé de densitométrie. La fraction cotylédon et germe est éventuellement tamisée (étape 20) pour obtenir des particules comprises entre 5 microns et 500 microns et rebroyée (étape 25) de manière à obtenir une poudre de granulométrie de préférence inférieure à 200 Pm.

Dans le mode de réalisation illustré en figure 1, on mélange entre 1 et 100 grammes, mais préférentiellement 5 grammes de cette poudre avec 1 litre d'eau (étape 30) et on pulvérise cette solution sur les plantes (étape 35).

Dans une variante, l'étape 30 est effectuée au moment du conditionnement du produit commercial qui se présente alors sous forme liquide. Dans un autre variante, l'étape 30 est effectuée par l'utilisateur du produit commercial, qui se présente alors sous forme d'une poudre.

Dans une autre variante, l'étape 30 n'est pas effectuée et on poudre les plantes directement avec la poudre obtenue à la suite de l'étape 25.

Dans une variante, la poudre obtenue à la suite de l'étape 25 est incorporée dans la formulation d'un produit phytosanitaire mettant en oeuvre d'autres fonctions que la seule fonction éliciteur, par exemple l'une des fonctions suivantes : fongicides, bactéricides, anti-viraux et/ou insecticides, stimulateur des défenses naturelles des plantes et/ou engrais.

La poudre obtenue à la fin de l'étape 25 forme un produit de traitement des plantes, comportant un produit sec obtenu à partir de Trigonella foenum graecum (fenugrec) comportant au moins une molécule active. On observe que ce produit est préférentiellement adapté à être mélangé à au moins un vecteur liquide avant usage.

La présente invention ne se limite donc pas à un produit de traitement des plantes prenant une forme poudreuse ou liquide mais s'étend, bien au contraire, à tout produit de traitement des plantes obtenu à partir d'un produit sec lui-même obtenu à partir de Trigonella foenum graecum par séparation ou extraction sans liquide, que ce produit soit ensuite incorporé dans un produit phytosanitaire, solubilisé avant conditionnement, solubilisé après conditionnement et avant utilisation ou laisser sous forme de poudre pour poudrage des plantes.

Le produit phytosanitaire, pour la fabrication duquel le produit sec obtenu à partir de Trigonella foenum graecum est utilisé, peut être, par exemple, adapté à stimuler les défenses de la plante, adapté à agir sur la précocité de développement des plantes et/ou adapté pour agir contre le développement de mycotoxines dans les plantes récoltées.

Ainsi, selon des variantes, le produit sec est en formulation en poudre, granules seuls ou granules en combinaison avec d'autres produits de formulation, par exemple des agents mouillants, dispersants et/ou adhésifs et/ou d'autres produits de traitements, par exemple parmi les suivants : fongicides, bactéricides, anti-viraux, insecticides, autres stimulateurs de défense et/ou engrais.

Préférentiellement, le produit de traitement des plantes tel que succinctement exposé ci-dessus, le produit sec obtenu à partir de Trigonella foenum graecum (fenugrec) comprend au moins deux molécules actives parmi les molécules actives de fenugrec. Préférentiellement au moins une molécule active est supérieure à 30 000 Dalton et au moins une molécule active est inférieure à 30 000 Dalton.

Le produit de traitement des plantes ainsi obtenu est adapté à stimuler les défenses de la plante, par une fonction éliciteur.

Préférentiellement, le produit de traitement des plantes ainsi obtenu est adapté à agir sur la précocité de développement des plantes et de récolte.

Préférentiellement, le produit de traitement des plantes ainsi obtenu est adapté à agir sur le développement de mycotoxines dans les produits obtenus après récolte.

Dans le mode de réalisation particulier décrit ci-dessus, le produit sec obtenu à partir de Trigonella foenum graecum (fenugrec) est, au moins partiellement, obtenu à partir de la graine de la plante fenugrec.

En variante, le produit sec obtenu à partir de Trigonella foenum graecum (fenugrec) est, au moins partiellement, obtenu à partir de la partie aérienne de la plante de fenugrec et/ou de la racine de la plante de fenugrec.

### Exemple 2 - Traitement de plantes maraîchères et ornementales par l'extrait de fenugrec

On pulvérise l'extrait préparé dans l'exemple 1 ci-dessus sur les plantes suivantes, et on teste la résistance de différentes plantes à différents parasites. A titre d'exemple, on a obtenu des effets très significatifs lors de traitements préventifs et curatifs sur les couples plantes / parasites suivants : melon / oïdium ; melon / bactériose ; melon / Thrips ; melon / aleurodes ; vigne / oïdium ; vigne /mildiou, vigne / excoriose, rosier / rouille, rosier / oïdium, blé / septoriose, blé /oïdium...etc....

On compare ces plantes traitées avec des plantes non traitées. Dans le cas de traitement préventifs, les plants traités sont peu ou pas attaqués par les parasites (contrairement aux plants non traités), à condition de renouveler le traitement régulièrement. Dans le cas de traitement curatifs, les plantes traitées voient les symptômes des infections diminuer au bout de quelques jours dès le premier traitement avec l'extrait de fenugrec. Le traitement peut avoir lieu sur jeunes plantes, sur boutures, ou sur plantes adultes, en fait quelque soit le stade végétatif des plantes.

On observe que :
- les inventeurs on découvert que la poudre de fenugrec a une forte action de stimulateur des défenses des plantes : elle permet de protéger pratiquement toutes les plantes contre pratiquement tous les parasites ;
- les inventeurs on découvert un effet secondaire intéressant concernant la précocité de la récolte des fruits et la précocité de production de toutes les plantes traitées : la poudre de fenugrec permet d'accélérer le développement des plantes ;
- les inventeurs ont aussi découvert un autre effet secondaire intéressant concernant le développement des mycotoxines (exemple de l'ochratoxine A) : la poudre de fenugrec permet de diminuer le taux de mycotoxines dans les produits obtenus après la récolte des produits traités (par exemple, on observe moins d'ochratoxine A dans le vin après traitement de la vigne par la poudre de fenugrec).

On observe aussi que, conformément à la présente invention :
- la poudre de graines de fenugrec peut se présenter sous n'importe quelle formulation : toutes les formes de poudre, de granulés (WDG, etc...), additionnées ou non de toutes sortes de mouillants, dispersants, ou adhésifs, ou de tout autre produit de formulation ;
- la poudre de fenugrec peut être mélangée avec tous les autres produits fongicides, bactéricides, anti-viraux, insecticides, stimulateur des défenses naturelles des plantes et/ou engrais pour améliorer ou étendre son action ;
- la matière active peut être extraite à partir des feuilles du fenugrec, ou de toute la partie aérienne de la plante, ainsi qu'à partir de ses racines ;
- la poudre de fenugrec peut être mise en solution au moment de l'application sur les plantes, mais peut également être mise en solution longtemps avant son utilisation, afin d'être présentée aux utilisateurs sous une forme liquide ;
- l'invention porte sur l'utilisation du fenugrec sous forme d'extrait sec, par exemple de poudre, quelque soit la méthode d'obtention de l'extrait sec et la méthode d'extraction pour arriver à l'obtention de cette matière active.

## Revendications

1. Produit de traitement des plantes, **caractérisé en ce qu'**il comporte un produit sec obtenu par extraction sans liquide à partir de Trigonella foenum graecum (fenugrec).

2. Produit de traitement des plantes selon la revendication 1, **caractérisé en ce que** ledit produit sec obtenu à partir de Trigonella foenum graecum (fenugrec) est adapté à être mélangé à au moins un vecteur liquide avant usage.

3. Produit de traitement des plantes selon l'une quelconque des revendications 1 ou 2, **caractérisé en ce que** le produit sec comporte au moins deux molécules actives issues du trigonella foenum graecum.

4. Produit de traitement des plantes selon la revendication 3, **caractérisé en ce que** au moins une molécule active issue de Trigonella foenum graecum est supérieure à 30 000 Dalton et au moins une molécule active issue de Trigonella foenum graecum est inférieure à 30 000 Dalton.

5. Produit de traitement des plantes selon l'une quelconque des revendications 1 à 4, **caractérisé en ce que** le produit sec obtenu à partir de Trigonella foenum graecum (fenugrec) est, au moins partiellement, obtenu à partir de la graine de la plante fenugrec.

6. Produit de traitement des plantes selon l'une quelconque des revendications 1 à 5, **caractérisé en ce que** le produit sec obtenu à partir de Trigonella foenum graecum (fenugrec) est, au moins partiellement, obtenu à partir de la partie aérienne de la plante de fenugrec.

7. Produit de traitement des plantes selon l'une quelconque des revendications 1 à 6, **caractérisé en ce que** le produit sec obtenu à partir de Trigonella foenum graecum (fenugrec) est obtenu, au moins partiellement, à partir de la racine de la plante de fenugrec.

8. Produit de traitement des plantes selon l'une quelconque des revendications 1 à 7, **caractérisé en ce que** le produit sec obtenu à partir de Trigonella foenum graecum est sous n'importe quelle forme de poudre seule, granules seules ou en combinaison avec d'autres produits de formulation.

9. Produit de traitement des plantes selon l'une quelconque des revendications 1 à 8, **caractérisé en ce que** le produit sec obtenu à partir de Trigonella foenum graecum est combinée avec des agents mouillants, dispersants et/ou adhésifs.

10. Produit de traitement des plantes selon l'une quelconque des revendications 1 à 9, **caractérisé en ce que** le produit sec obtenu à partir de Trigonella foenum graecum est combiné avec d'autres produits de traitements parmi les suivants : fongicides, bactéricides, anti-viraux, insecticides, autres stimulateurs de défense et/ou engrais.

11. Utilisation d'un produit de traitement des plantes selon l'une quelconque des revendications 1 à 10, pour la fabrication d'une composition phytosanitaire adaptée à stimuler les défenses de la plante.

12. Utilisation d'un produit de traitement des plantes selon l'une quelconque des revendications 1 à 10, pour la fabrication d'une composition phytosanitaire adaptée à agir sur la précocité de développement des plantes.

13. Utilisation d'un produit de traitement des plantes selon l'une quelconque des revendications 1 à 10, pour la fabrication d'une composition phytosanitaire adaptée pour agir contre le développement de mycotoxines dans les plantes récoltées.

14. Utilisation d'un produit de traitement des plantes selon l'une quelconque des revendications 1 à 10, pour la fabrication d'une composition phytosanitaire adaptée à la fois pour stimuler les défenses immunitaires de la plante, et agir sur la précocité du développement ou pour agir sur le développement de mycotoxines.

15. Procédé d'obtention d'un produit de traitement des plantes selon l'une quelconque des revendications 1 à 10, **caractérisé en ce qu'**il comporte une étape d'extraction par séparation sans liquide d'un produit sec à partir de Trigonella foenum graecum (fenugrec)..

16. Procédé d'obtention d'un produit de traitement des plantes selon la revendication 15, **caractérisé en ce qu'**il comporte une étape de réduction en poudre d'une matière de base.

17. Procédé d'obtention d'un produit de traitement des plantes selon l'une quelconque des revendications 15 ou 16, **caractérisé en ce qu'**il comporte:
a. une étape de broyage de graines de fenugrec,
b. une étape de séparation de la fraction germe et cotylédon de la fraction tégument et mucilage,
c. une étape de re-broyage de la fraction germe et cotylédon pour obtenir une poudre de granulométrie prédéterminée stockable de manière stable,
d. une étape de solubilisation de ladite poudre dans l'eau.

18. Procédé d'obtention d'un produit de traitement des plantes selon la revendication 17, **caractérisé en ce qu'**il comporte une étape de tamisage de la fraction germe et cotylédon pour obtenir des particules comprises entre 5 microns et 500 microns.

## Claims

1. Plant treatment product, **characterized in that** it comprises a dry product obtained through extraction without liquid from ***Trigonella*** foenum graecum (fenugreek).

2. Plant treatment product according to claim 1, **characterized in that** said dry product obtained from ***Trigonella*** foenum graecum (fenugreek) is designed to be mixed with at least one liquid carrier before use.

3. Plant treatment product according to any of claims 1 or 2, **characterized in that** the dry product comprises at least two active molecules derived from ***trigonella*** foenum graecum.

4. Plant treatment product according to the claim 3, **characterized in that** at least one active molecule derived from ***Trigonella*** foenum graecum is more than 30,000 Dalton and at least one active molecule derived from ***Trigonella*** foenum graecum is less than 30,000 Dalton.

5. Plant treatment product according to any of claims 1 through 4, **characterized in that** the dry product obtained from ***Trigonella*** foenum graecum (fenugreek) is, at least in part, obtained from the seed of the fenugreek plant.

6. Plant treatment product according to any of claims 1 through 5, **characterized in that** the dry product obtained from ***Trigonella*** foenum graecum (fenugreek) is, at least in part, obtained from the aerial part of the fenugreek plant.

7. Plant treatment product according to any of claims 1 through 6, **characterized in that** the dry product obtained from ***Trigonella*** foenum graecum (fenugreek) is obtained, at least in part, from the root of the fenugreek plant.

8. Plant treatment product according to any of claims 1 through 7, **characterized in that** the dry product obtained from ***Trigonella*** foenum graecum comes in any form of powder alone, pellets alone or in combination with other formulation products.

9. Plant treatment product according to any of claims 1 through 8, **characterized in that** the dry product obtained from ***Trigonella*** foenum graecum is combined with wetting, dispersing and/or adhering agents.

10. Plant treatment product according to any of claims 1 through 9, **characterized in that** the dry product obtained from ***Trigonella*** foenum graecum is combined with other treatment products among the following: fungicides, bactericides, antivirals, insecticides, other defense stimulators and/or fertilizers.

11. Use of a plant treatment product according to any of claims 1 through 10, for the production of a phytosanitary compound designed to stimulate the plant defenses de the plant.

12. Use of plant treatment product according to any of claims 1 through 10, for the fabrication of a phytosanitary compound designed to act on the early development of plants.

13. Use of plant treatment product according to any of claims 1 through 10, for the production of a phytosanitary compound designed to act against the development de mycotoxins in the harvested plants.

14. Use of plant treatment product according to any of claims 1 through 10, for the production of a phytosanitary compound designed to either stimulate the immune defenses of the plant and act on its early development or act on the development of mycotoxins.

15. Method to obtain a plant treatment product according to any of claims 1 through 10, **characterized in that** it comprises an extraction step through separation without liquid of a dry product from ***Trigonella*** foenum graecum (fenugreek).

16. Method to obtain a plant treatment product according to claim 15, **characterized in that** it comprises a powder reduction step of a base material.

17. Method to obtain a plant treatment product according to any of claims 15 or 16, **characterized in that** it comprises:
a. a fenugreek seed crushing step,
b. a separation step of germ and cotyledon fraction from the tegument and biofilm fraction,
c. a re-crushing step of the germ and cotyledon fraction to obtain a powder of a predetermined grain size that can be stored in a stable manner,
d. a solubilization step of said powder in water.

18. Method to obtain a plant treatment product according to claim 17, **characterized in that** it comprises a screening step of the germ and cotyledon fraction to obtain particles between 5 microns and 500 microns.

## Patentansprüche

1. Pflanzenbehandlungsmittel, **dadurch gekennzeichnet, dass** es einen trockenen Stoff umfasst, der durch flüssigkeitslose Extraktion aus Trigonella foenum graecum (Bockshornklee) gewonnen wurde.

2. Pflanzenbehandlungsmittel nach Anspruch 1, **dadurch gekennzeichnet, dass** der trockene Stoff, der aus Trigonella foenum graecum (Bockshornklee) gewonnen wurde, dafür geeignet ist, vor der Anwendung mindestens einem flüssigen Trägerstoff beigemischt zu werden.

3. Pflanzenbehandlungsmittel nach einem der Ansprüche 1 und 2, **dadurch gekennzeichnet, dass** der trockene Stoff mindestens zwei Wirkstoffmoleküle umfasst, die aus Trigonella foenum graecum stammen.

4. Pflanzenbehandlungsmittel nach Anspruch 3, **dadurch gekennzeichnet, dass** mindestens ein Wirkstoffmolekül, das aus Trigonella foenum graecum stammt, größer als 30.000 Dalton ist und dass mindestens ein Wirkstoffmolekül, das aus Trigonella foenum graecum stammt, kleiner als 30.000 Dalton ist.

5. Pflanzenbehandlungsmittel nach einem der Ansprüche 1 bis 4, **dadurch gekennzeichnet, dass** der trockene Stoff, der aus Trigonella foenum graecum gewonnen (Bockshornklee) wurde, mindestens teilweise aus dem Samen der Bockshornkleepflanze gewonnen wurde.

6. Pflanzenbehandlungsmittel nach einem der Ansprüche 1 bis 5, **dadurch gekennzeichnet, dass** der trockene Stoff, der aus Trigonella foenum graecum (Bockshornklee) gewonnen wurde, mindestens teilweise aus den oberirdischen Teilen der Bockshornkleepflanze gewonnen wurde.

7. Pflanzenbehandlungsmittel nach einem der Ansprüche 1 bis 6, **dadurch gekennzeichnet, dass** der trockene Stoff, der aus Trigonella foenum graecum (Bockshornklee) gewonnen wurde, mindestens teilweise aus der Wurzel der Bockshornkleepflanze gewonnen wurde.

8. Pflanzenbehandlungsmittel nach einem der Ansprüche 1 bis 7, **dadurch gekennzeichnet, dass** der trockene Stoff, der aus Trigonella foenum graecum gewonnen wurde, allein in Pulverform, allein in Form von Körnchen oder in Mischung mit anderen Formulierungsbestandteilen vorliegt.

9. Pflanzenbehandlungsmittel nach einem der Ansprüche 1 bis 8, **dadurch gekennzeichnet, dass** der trockene Stoff, der aus Trigonella foenum graecum gewonnen wurde, mit Benetzungsmitteln, Dispergiermitteln und/oder Bindemitteln kombiniert ist.

10. Pflanzenbehandlungsmittel nach einem der Ansprüche 1 bis 9, **dadurch gekennzeichnet, dass** der trockene Stoff, der aus Trigonella foenum graecum gewonnen wurde, mit weiteren der im Folgenden genannten Behandlungsmittel kombiniert ist: Fungizide, Bakterizide, Virenbekämpfungsmittel, Insektizide, andere Mittel zur Erhöhung der Widerstandskraft und/oder Düngemittel.

11. Verwendung eines Pflanzenbehandlungsmittels nach einem der Ansprüche 1 bis 10 zur Herstellung einer Zubereitung für den Pflanzenschutz, die dafür geeignet ist, die Widerstandskraft der Pflanze zu erhöhen.

12. Verwendung eines Pflanzenbehandlungsmittels nach einem der Ansprüche 1 bis 10 zur Herstellung einer Zubereitung für den Pflanzenschutz, die dafür geeignet ist, die Frühreife von Pflanzen zu beeinflussen.

13. Verwendung eines Pflanzenbehandlungsmittels nach einem der Ansprüche 1 bis 10 zur Herstellung einer Zubereitung für den Pflanzenschutz, die dafür geeignet ist, die Entstehung von Mykotoxinen in geernteten Pflanzen zu bekämpfen.

14. Verwendung eines Pflanzenbehandlungsmittels nach einem der Ansprüche 1 bis 10 zur Herstellung einer Zubereitung für den Pflanzenschutz, die dafür geeignet ist, sowohl die Widerstandskraft des Immunsystems der Pflanze zu erhöhen als auch die Frühreife oder die Entstehung von Mykotoxinen zu beeinflussen.

15. Verfahren zur Gewinnung eines Pflanzenbehandlungsmittels nach einem der Ansprüche 1 bis 10, **dadurch gekennzeichnet, dass** es einen Extraktionsschritt umfasst, bei welchem ein trockener Stoff ohne Einsatz von Flüssigkeit von Trigonella foenum graecum (Bockshornklee) abgetrennt wird.

16. Verfahren zur Gewinnung eines Pflanzenbehandlungsmittels nach Anspruch 15, **dadurch gekennzeichnet, dass** es Schritt umfasst, in welchem ein Ausgangsstoff zu Pulver zerkleinert wird.

17. Verfahren zur Gewinnung eines Pflanzenbehandlungsmittels nach einem der Ansprüche 15 und 16, **dadurch gekennzeichnet, dass** es folgende Schritte umfasst:
a. einen Schritt, in welchem Bockshornkleesamen zerkleinert werden,
b. einen Schritt, in welchem die Fraktion, die aus dem Keimling und den Keimblättern besteht, von der Fraktion, die aus der Samenhaut und pflanzlichen Schleimsubstanzen besteht, abgetrennt wird,
c. einen Schritt, in welchem die Keimlings- und Keimblattfraktion erneut zerkleinert wird, um ein Pulver eines zuvor festgelegten Feinheitsgrades zu erhalten, welches auf stabile Weise gelagert werden kann,
d. einen Schritt, in welchem das genannte Pulver in Wasser solubilisiert wird.

18. Verfahren zur Gewinnung eines Pflanzenbehandlungsmittels nach Anspruch 17, **dadurch gekennzeichnet, dass** es einen Schritt umfasst, in welchem die Keimlings- und Keimblattfraktion gesiebt wird, sodass Teilchen einer Größe zwischen 5 und 500 µm erhalten werden.
